(19) Europäisches Patentamt
European Patent Office
Office européen des brevets

(11) EP 2 259 464 B1

(12) EUROPEAN PATENT SPECIFICATION

(45) Date of publication and mention
of the grant of the patent:
**03.04.2013  Bulletin 2013/14**

(51) Int Cl.:
**H04J 14/02** (2006.01)

(21) Application number: **09290408.5**

(22) Date of filing: **02.06.2009**

(54) **Method and equipment for adjusting power amplification in an optical network**

Verfahren und Gerät zur Einstellung der Leistungsverstärkung in einem optischen Netzwerk

Procédé et équipement pour ajuster l'amplification de puissance dans un réseau optique

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**08.12.2010  Bulletin 2010/49**

(73) Proprietors:
• **Alcatel Lucent**
  **75007 Paris (FR)**
• **INRIA - Institut National de Recherche en Informatique et en Automatique**
  **78153 Le Chesnay Cedex (FR)**

(72) Inventors:
• **Peloso, Pier**
  **91620 Nozay (FR)**
• **Fabre, Eric**
  **35000 Rennes**
   **(FR)**
• **Pecci, Pascal**
  **91620 Nozay (FR)**

(74) Representative: **Croonenbroek, Thomas Jakob et al**
**Cabinet Innovincia**
**11, Avenue des Tilleuls**
**74200 Thonon-les-Bains (FR)**

(56) References cited:
**US-A1- 2004 208 531**

## Description

## BACKGROUND OF THE INVENTION

The present invention relates to the field of communication networks and in particular to optical communication networks.

In such networks, an issue is to manage the power level in the links of the network in order to obtain a defined signal quality at the end of a transparent path. Many constraints influence the determination of the power level. Indeed, according to the connection features (length, attenuation of the optical links,...), the power level needs to be adjusted in order to optimize the signal quality at destination. Thus, the objective of the power management is to select for each link along the connection, a power level that minimizes the impairments along the different connections of the link. Such optimization is hard to implement because there are many additional constraints due to the physical features of the equipments and because local constraints may have consequences on the whole network such that a global optimization is required.

US 2004/0208531 shows a coordinated method for controlling dynamic gain equalization in an optical transport network.

## SUMMARY OF THE INVENTION

It is therefore an object of the present invention to provide a method allowing achieving power level adjustment and which is easy to implement.

Thus, the present invention refers to a method for adjusting a channel power level along the path of a connection in an optical network, said path crossing a plurality of links comprising control means for adjusting said channel power level, the adjustment being achieved in function of:

- connection features,
- physical features of the links,
- control means features of the links,
  wherein the adjustment of a channel power level along the path of a connection is achieved by local computations of the channel power level in the plurality of links crossed by the connection.

According to another embodiment, a power level adjustment cooperation between the plurality of links crossed by the connection is achieved by the transmission of at least one message along the links of the connection, said message comprising at least information concerning the connection and features of the links of said connection.

According to an aspect of the invention, the information of the message concerning a specific link is updated by the concerned link itself.

According to an additional embodiment, the control means comprise at least one optical element configured to adjust individual channel power levels.

According to a further aspect of the invention, the local computations comprise the adjustment of the channel power levels at the output of the links to match target power levels, said target power levels being determined for each link in function of:

- the subsequent link features,
- connection features.

According to another aspect of the invention, the tolerated difference between an actual power level of a link and the target power level of said link is constrained in function of:

- power available in the link,
- link control means features.

According to an additional aspect of the invention, an actual power level is modified in function of power status in other links of the connection, said power status being transmitted by at least one message.

According to a further aspect of the invention, a target power level is modified in function of a signal quality at the end of the connection.

According to an additional aspect of the invention, the message comprises at least:

- the output power of the previous link along the connection with respect to the link to which the message is currently sent;
- the power status of at least one of the next links along the connection with respect to the link to which the message is currently sent.

According to another aspect of the invention, the power status of a link comprises the difference between the actual channel power level and the target power level of said channel.

According to a further aspect of the invention, the power status of a link comprises the range of power that said link can reach on said channel.

According to an additional aspect of the invention, said method refers to an iterative and dynamic adjustment of the channel power level along said connection that converges towards an optimal solution.

According to another aspect of the invention, the iterative and dynamic adjustment corresponds to the minimization of a function f(P) such that:

$$f(P) = \sum_{n=1}^{N} (P_n - m_n)^2$$

where n is the link index, N the number of links in the connection, $m_n$ is the target power level for the link n, $P_n$

is the actual power level for the link n (both powers being expressed in a logarithmic scale),

said minimization being subject to the following constraints:

$$P_n = P_{n-1} + \beta_n$$

where $\beta_n$ is the gain in the link n and corresponds to the sum of the power losses and power amplification in the link n, and

$$\beta_n^{min\,us} \leq \beta_n \leq \beta_n^{plus}$$

where $\beta_n^{minus}$ and $\beta_n^{plus}$ the bounds of the gain for the link n.

According to an additional aspect of the invention, the vulnerability characterizing parameter of a link influences the channel power level such that, in a connection crossing several links, for a link having a higher vulnerability characterizing parameter, the tolerated difference between an actual channel power level and the target power level is lower than for a link having a lower vulnerability characterizing parameter.

According to a further aspect of the invention, the iterative and dynamic adjustment corresponds to the minimization of a function f(P) such that:

$$f(P) = \sum_{n=1}^{N} \left( \frac{1}{\sigma_n^2} \right) (P_n - m_n)^2$$

where n is the link index, N the number of links in the connection, $m_n$ is the target power level for the link n, $P_n$ is the actual power level for the link n (both powers being expressed in a logarithmic scale), $(1/\sigma_n)^2$ the vulnerability characterizing parameter of the link n,

said minimization being subject to the following constraints:

$$P_n = P_{n-1} + \beta_n$$

where $\beta_n$ is the gain in the link n and corresponds to the sum of the power losses and
power amplification in the link n, and

$$\beta_n^{min\,us} \leq \beta_n \leq \beta_n^{plus}$$

where $\beta_n^{minus}$ and $\beta_n^{plus}$ the bounds of the gain for the link n.

According to an additional aspect of the invention, the vulnerability characterizing parameter of the link varies in function of at least one parameter in the following list:

- length of the link,
- features of the optical transmission means used in the link such as the type of optical fibers or the type of optical amplifiers,
- link design with respect to the chromatic dispersion.

According to another aspect of the invention, the vulnerability characterizing parameter of a connection influences the channel power level such that, in a link along the connection, for a channel corresponding to a connection having a higher vulnerability characterizing parameter, the tolerated difference between an actual channel power level and the target power level is lower than for a channel corresponding to a connection having a lower vulnerability characterizing parameter.

According to a further aspect of the invention, the iterative and dynamic adjustment corresponds to the minimization of a function f such that:

$$f(P) = \sum_{c \in C} \left( \frac{1}{\sigma_c^2} \right) \sum_{n=1} \left( \frac{1}{\sigma_n^2} \right) (P_{c,n} - m_{c,n})^2$$

where $m_{c,n}$ is the target power for the connection c and the link n, $P_{c,n}$ is the actual power for the connection c and the link n (both powers being expressed in a logarithmic scale) and $(1/\sigma_c^2)$ is the vulnerability characterizing parameter of the connection c, subject to the following constraints:

$$\beta_{i,n}^{min\,us} \leq \beta_{i,n} \leq \beta_{i,n}^{plus}$$

where $\beta_{i,n}$ is the gain for the channel i and the link n and $\beta_{i,n}^{minus}$ and $\beta_{i,n}^{plus}$ the bounds of the gain for the channel i and the link n and

$$\forall n, \sum_i 10^{\frac{P_{i,n}}{10}} = \sum_i e^{a \cdot P_{i,n}} \leq C_n$$

where $C_n$ is the total available power in the link n (expressed in linear scale), $P_{i,n} = P_{i,n-1} + \beta_{i,n}$ and a is a constant.

According to another embodiment of the invention, a token is transmitted along the links of the connection and wherein a link is authorized to modify its actual power level and/or its target power value only when authorization is given by the token.

According to another aspect of the invention, the token is a message and comprises information about the connection, links features and the links power settings.

The present invention also refers to an optical node comprising:

- processing means for achieving local computation of the channel power levels,
- control means for adjusting channel power levels according to the value determined by the processing means.

According to another embodiment of the invention, said optical node comprises:

- reception means adapted for receiving a message comprising information about the links of the connection,
- transmission means for transmitting a message to another node of the connection, and wherein the processing means are adapted for reading information received in a message.

According to a further embodiment of the invention, said optical node comprises:

- updating means adapted for updating the information of the message concerning a link of the connection.

According to another aspect of the invention, the control means comprise:

- at least one optical element configured to set individual channel attenuations.

According to an additional aspect of the invention, the control means are adapted to adjust the power gain of the individual channels to a value determined by the processing means.

According to another aspect of the invention, the control means are adapted to control the individual channel power at the output of the link to a value determined by the processing means.

The present invention also refers to an optical network comprising a plurality of optical nodes wherein at least one token is transmitted along the connections of the network, said token comprising information about the connection features such as the channel power level along the connection and the power level status of the links along the connection.

According to another aspect of the invention, an optical node needs to be authorized by the token in order to be allowed to modify its actual power value and/or its target power values.

## BRIEF DESCRIPTION OF THE DRAWINGS

FIG.**1** shows a schematically illustration of a connection in an optical network;
FIG.**2** shows a schematically illustration of an optical link;
FIG.**3** shows a schematically illustration of the channel power adjustment means in an optical link;
FIG.**4** shows a graph representing the bite error rate at the output of a link in function of the input power;
FIG.**5** shows a schematically illustration of a portion of an optical network comprising four links and four different connections;
FIG.**6** shows a chart of the target power levels for the four connections represented in figure.5;
FIG.**7** shows a chart of the power levels for the four connections represented in figure.5 during channel power adjustment;
FIG.**8** shows a chart of the power levels for the four connections represented in figure.5 during channel power adjustment;
FIG.**9** shows a chart of the power levels for the four connections represented in figure.5 after channel power level adjustment;

## DETAILED DESCRIPTION OF THE INVENTION

As used herein, the term "connection" refers to the transmission of a signal from an ingress node to an egress node through at least one link;

As used herein, the term "vulnerability characterizing parameter of a connection" refers to a lack of robustness of the connection with respect to degradation or impairments undergone by a signal along the connection. Different parameters may influence said vulnerability characterizing parameter such as

- the length of the connection,
- the modulation format of the connection,
- the bitrate of the connection,
- the format of the error correction code of the connection,
- the physical features of a link such as the type of optical fibers, for example;

As used herein, the term "vulnerability characterizing parameter of a link" refers to a lack of robustness of a connection along said link with respect to degradation or impairments undergone by a signal along the link. Different parameters may influence said vulnerability characterizing parameter such as

- the length of the link,
- the physical features of the link such as the type of optical fibers for example;

As used herein, the term "length of a connection" refers to a parameter representative of a quantitative representation of the connection, it can be for example the physical length itself but also the number of links of the connection, the number of spans of the connection or a combination of the number of links or spans and their length;

As described previously, power management in an optical network is a global issue as a modification in one link of the network may have consequences in the rest of the network due to the multiplicity of connections crossing the network. In order to achieve such global optimization, embodiments of the present invention refer to a distributed method performing a plurality of local computations and leading to a global optimization.

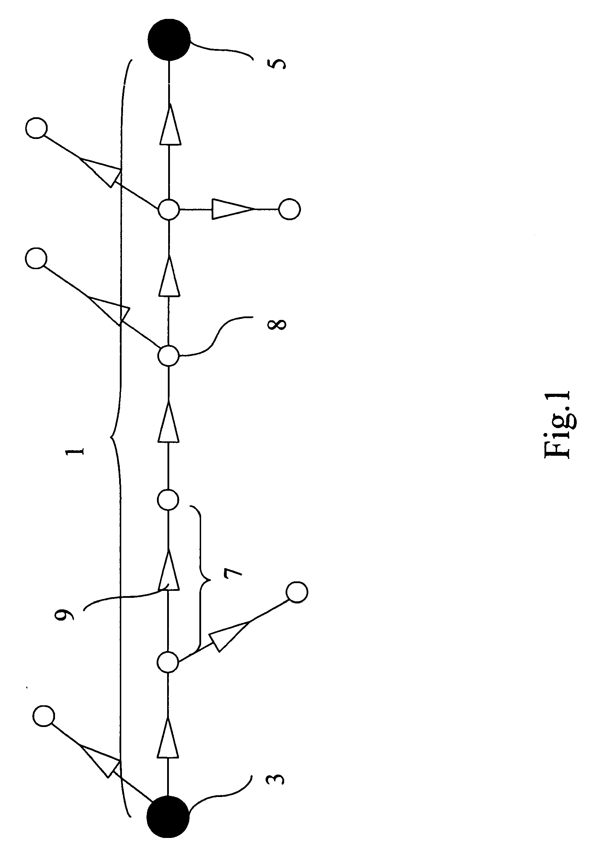

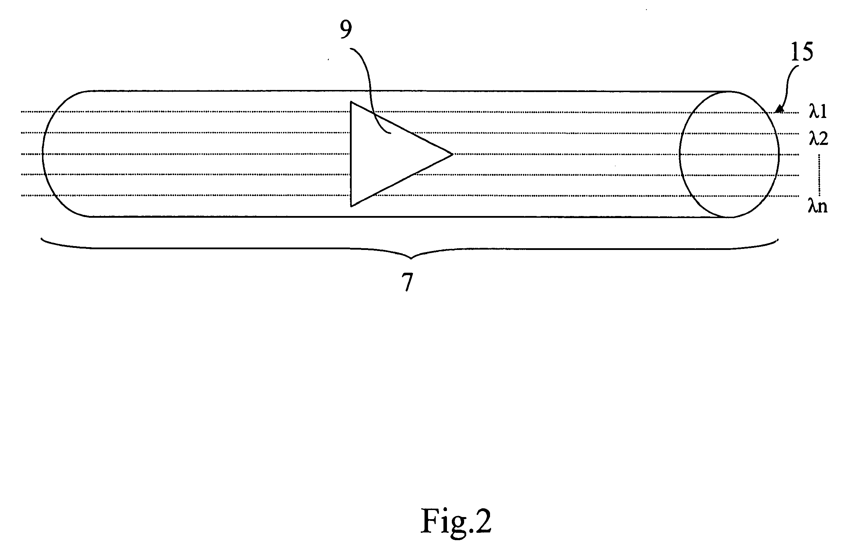

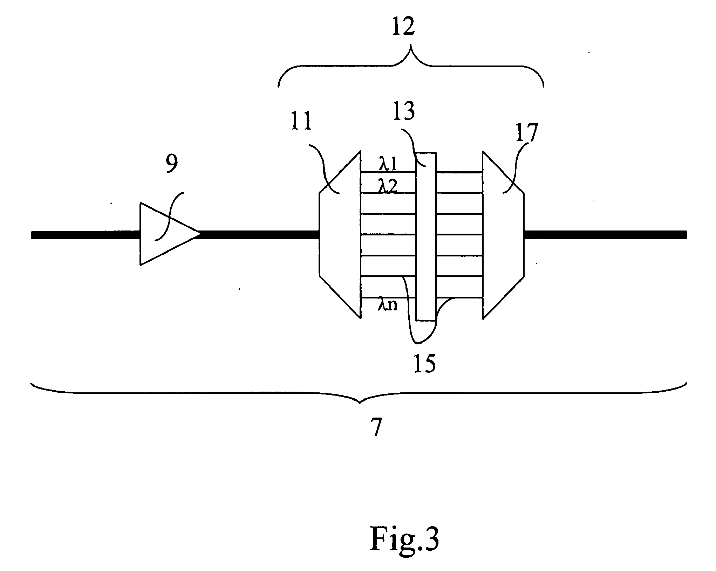

Fig.1 represents an example of a connection 1 from an ingress node 3 to an egress node 5 through a plurality of links 7 and switching nodes 8, each link 7 comprising at least one optical amplifier 9. Moreover, a link comprises a plurality of channels 15 as represented in Fig.2 corresponding to a plurality of connections 1, each channel 15 having a given wavelength. In embodiments of the present invention, the power level of each channel is adjusted individually, preferably integrated within the switching nodes 8. Such individual adjustment may be achieved, for example, by optical systems 12 as described in Fig.3, which may be disposed within a switching node 8. Optical systems 12 may comprise any individual wavelength attenuation system such as a wavelength selective switch (WSS) or a wavelength blocker (WB) and generally comprises a demultiplexer 11 for separating the different channels 15 which are then transmitted to a range of optical attenuators 13 (for example a set of variable optical attenuators (VOAs)) and then to a multiplexer 17. Said range of optical attenuators 13 can apply individual attenuations to the different channels 15 and therefore adjust individually the power level of each channel 15. The channels are then remultiplexed in the multiplexer 17 in order to be transmitted along a link 7.

Thus, in order to optimize the signal quality along a connection 1, the power level of the corresponding channel 15 has to be adjusted in each link 7 along the connection 1. To determine this adjustment, target power levels are determined in each link 7. Said target power level corresponds to a power level providing the lowest signal degradation in the subsequent link (in the case when the power level is adjusted at the output of the link).

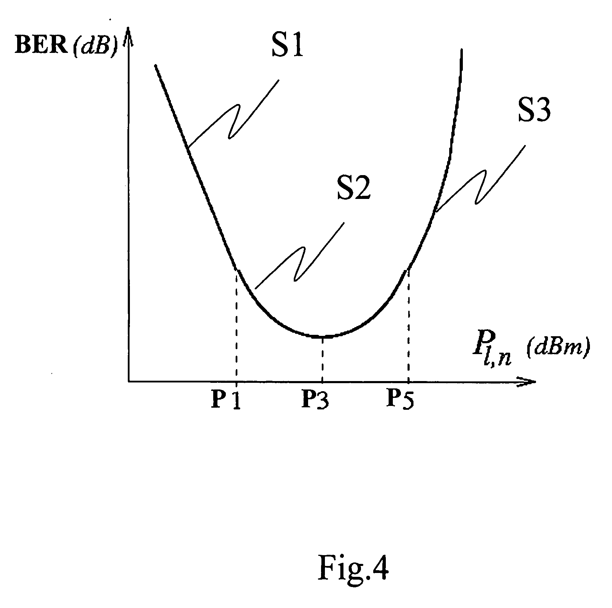

Indeed, figure 4 shows a curve that is a representation of the bit error rate (BER) in function of the power level ($P_{1,n}$) on a channel 15 of an optical link 7, both the BER and the power level being represented in decibels (dB). In this curve, we can distinguish three segments.

First there is a linear segment S1. When the power level is too low, that is lower than P1, noise produces impairments and the bit error rate grows linearly with a decrease of power level.

The second segment S2 between power levels P1 and P2 has a parabolic form. This segment S2 is a segment where the error bit rate stays within acceptable limits.

It can be noted that the bit error rate has a minimum value at a power value P3 corresponding to the target power level.

The third segment S3 from power level P3 increases exponentially with increasing power level. This is due to the fact that when the power level is too high, optical non-linear effects produce impairments in the signal leading to a degradation of the signal and therefore to an increase of the bit error rate.

The general shape of the curve with the linear S1, parabolic S2 and exponential S3 segments is the same for all channels and links. However, the total value of the bit error rate, in particular the minimum BER at P3 and the width of segment S2 varies in function of the physical parameters of the link that influence the signal degradation.

Thus, for a connection 1, the idea is to set in each link 7 of the connection 1, the power level of the corresponding channel 15 to the target power level.

Nevertheless, additional constraints may prevent the adjustment to the target power levels such as the features of the power distribution means. Thus, a trade-off has to be achieved to adjust the channel power levels along the connection. This trade-off can be represented as the minimization of a cost function f such that

$$f(P) = \sum_{n=1}^{N} (P_n - m_n)^2$$

where n is the link index, $m_n$ is the target power level for the link n and $P_n$ the actual power level for the link n, both powers being expressed in a logarithmic scale. the function f being subject to the following constraints:

$$P_n = P_{n-1} + \beta_n$$

where $\beta_n$ is the power gain in the link n which is the parameter that needs to be adjusted. and

$\beta_n^{minus} \le \beta_n \le \beta_n^{plus}$ where $\beta_n^{minus}$ and $\beta_n^{plus}$ are respectively the lower and upper bounds of the amplification gain in the link n.

Moreover, the available power in a link 7 is limited such that the actual power level in a link 7 can be modified in order to compensate for a lack or an excess of power in another link 7 of the connection 1.

Besides, according to the embodiments of the present invention, the determination of the power levels along a connection 1 is achieved in each link 7. Thus, instead of having a centralized computer that determines the power levels for each channel 15 of each link 7 of the network, local computations are achieved in each link 7 of the network. Thus, the local optimizations achieved in each link 7 allow reaching a global optimization in the whole network which optimizes the power adjustment in the network.

However, to perform a local optimization, a link 7 needs information about the connections 1 performed through said link 7 and about the other links 7 concerned by said connections 1. Thus, messages are transmitted between the links 7 of a connection 1 in order to provide to the links 7 the information required to perform local optimizations. Such messages may be transmitted, for example, according to a resource reservation protocol (RSVP).

Moreover, in order to reach an optimized solution, the computations along a connection 1 are achieved iteratively. In practice, each time a link 7 receives information from a message comprising new values concerning the external constraints, the link 7 performs a new local computation that takes into account the new constraints values. Then, a new adjustment of the power level in the concerned link 7 is achieved. The value of the power level in said link is updated in the message and the message is then transmitted to at least another link 7 of the connection 1. Thus, as the method is converging, after a few iterations, corresponding to transmissions of a few messages along the connection 1, the channel power levels along the connection 1 are adjusted to an optimized value. Moreover, the method is dynamic such that a modification occurring in the network from an event such as a new connection creation or a connection suppression or a change in propagation features is taken into account in the computations achieved in each link 7.

Besides, two different embodiments may be distinguished:

In a first embodiment, the adjustment concerns the power amplification gain such that if the input power of a link varies then the output power of said link varies accordingly.

In such configuration, the required information in order to achieve the local optimization is:

-    the input power of the link which corresponds to the output power of the previous link and which is either given by the message or measured locally,
-    the power status of the connection in the following links comprising the difference between the actual power level and the target power level of said following links.

In a second embodiment, the adjustment concerns the output power of the link such that if the input power of a link varies, the local gain is automatically adjusted in order to provide the selected output power. In such configuration, the required information in order to achieve the local optimization is:

-    the input power of the link which corresponds to the output power of the previous link and which is either given by the message or measured locally,
-    the power status of the connection in the following links comprising:
-    the difference between the actual power level and the target power level in said following links of the connection,
-    the range of power level reachable by said following links of the connection.

It has to be noted that the power status of only a limited number of following links can be sufficient if the margin between the actual power level and the bounds of the range of power level of said following links is high enough.

According to an aspect of the present invention the vulnerability characterizing parameter of a link 7 can be taken into account in the determination of the power level in the link in reducing the tolerated difference between the actual power level and the target power level (also called range of power level) for the links 7 having high vulnerability characterizing parameters.

In practice, the influence of the vulnerability characterizing parameter of the link 7 is taken into account by introducing said parameter in the function f to minimize such that f becomes

$$f(P) = \sum_{n=1}^{N} \left( \frac{1}{\sigma_n^2} \right) (P_n - m_n)^2$$

where $(1/\sigma_n)^2$ is the vulnerability characterizing parameter of the link n.

Furthermore, in a link, additional constraints concerning the other channels 15 and therefore other connections may appear. Indeed, the sum of the channel power levels is limited by the total available power in the link.

Moreover, according to an aspect of the present invention, the adjustment of the power levels in a link 7 is influenced by the vulnerability characterizing parameter of the connections 1 corresponding to the different channels 15. Thus, the tolerated difference between the actual power level and the target power level (also called range of power level) for a channel 15 corresponding to a connection 1 having a higher vulnerability characterizing parameter is lower than for a channel 15 corresponding to a connection 1 having a lower vulnerability characterizing parameter.

In practice, the influence of the vulnerability characterizing parameter of the connection is taken into account by introducing said parameter in the function f to minimize such that f becomes

$$f(P) = \sum_{c \in C} \left( \frac{1}{\sigma_c^2} \right) \sum_{n=1} \left( \frac{1}{\sigma_n^2} \right) (P_{c,n} - m_{c,n})^2$$

where c is the connection index and $(1/\sigma_c)^2$ is the vulnerability characterizing parameter of the connection c.

The constraint concerning the total available power has also to be added:

$$\forall n, \sum_i 10^{\frac{P_{i,n}}{10}} = \sum_i e^{a \cdot P_{i,n}} \leq C_n$$

where $C_n$ is the total available power in the link n expressed in linear scale.

According to another aspect of the present invention, the target power levels can be modified in function of the quality of signal at destination. For example, if after a first adjustment of the channel power levels along the connection the signal quality at destination is much higher than the requested signal quality for this connection, the target power levels along the connection can be reduced in order to save amplification power for other connections or for reducing the total required amount of power.

In order to synchronize the channel power adjustment along a link and prevent a modification of the power level of two links of a connection at the same time, according to an embodiment of the present invention, a token may be used such that a link needs the authorization of the token in order to modify its actual channel power levels or the target power levels of the different channels.

In practice, said token may be, for example, a message being transmitted along a connection such that only the link to which the token is attached is able to modify its power adjustment. Moreover, as the other messages, the token may comprise information concerning the connection (length of the connection, number of links in the connection, vulnerability characterizing parameter of the connection,...) and the links of said connection (power status of the links,...) such that the link may achieve power level adjustment in function of the information provided by the token or by previous messages. After adjustment, the link updates the information concerning its power level adjustment in the token and then transmits the token to another link (generally the previous or the next link). Thus, the token may be transmitted back and forth along the connection in order to perform the iterative optimization along the connection which leads to an optimized adjustment of the power levels taking into account the various constraints.

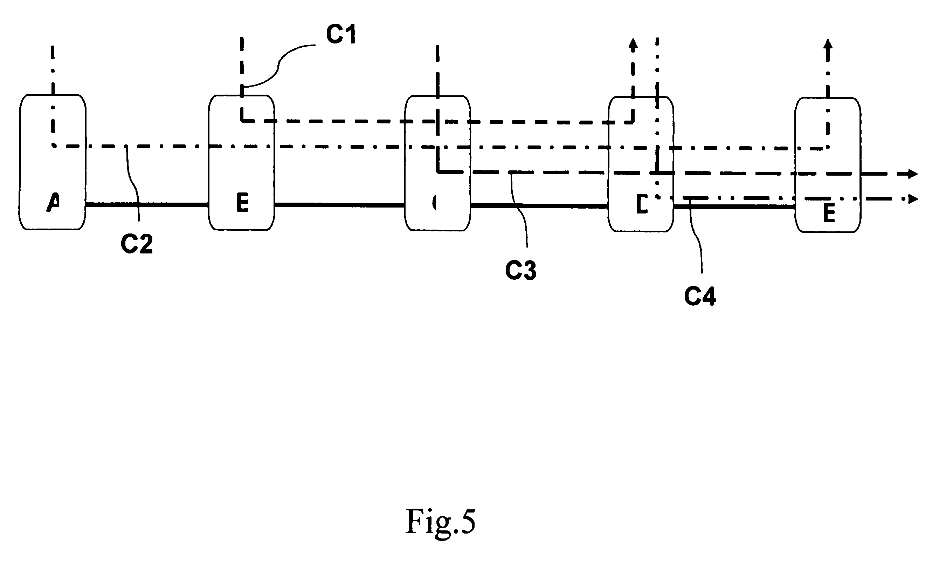

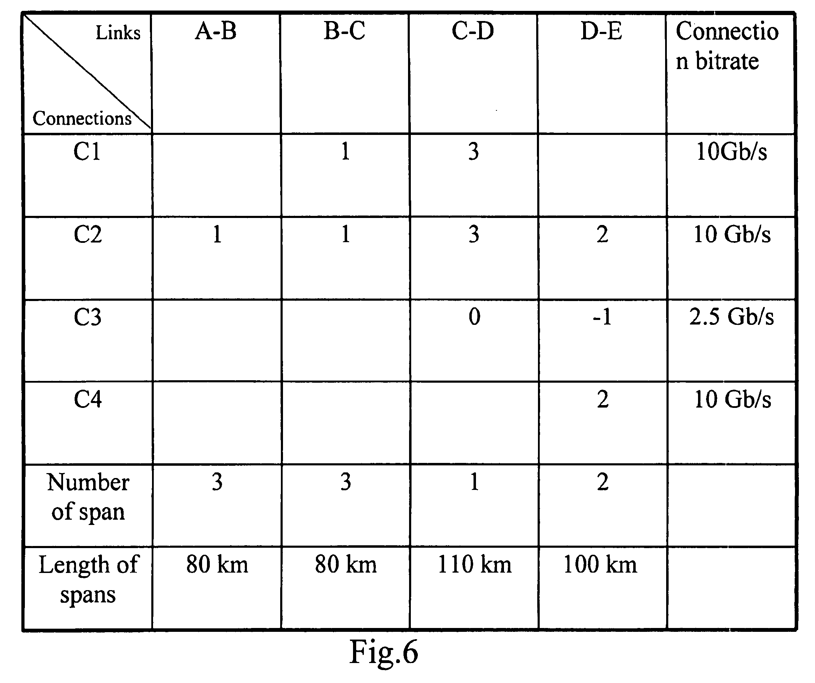

To better understand the embodiments of the present invention, an example will now be described based on the portion of network presented in figure 5. Said portion of network represents a path comprising four links (A-B, B-C, C-D and D-E) and wherein four connections (C1, C2, C3 and C4) are involved. The table of figure 6 represents the target power levels which have been determined for each connection in each link. The determination of said target power level takes into account the features of the link (number and length of the spans) which are represented in the last two rows and the features of the connections (connection bitrate) which are given in the last column. Furthermore, it has to be noted that the value power values of the different charts are in decibels (dB).

Then, the local computations will tend to get as close as possible of these target values.

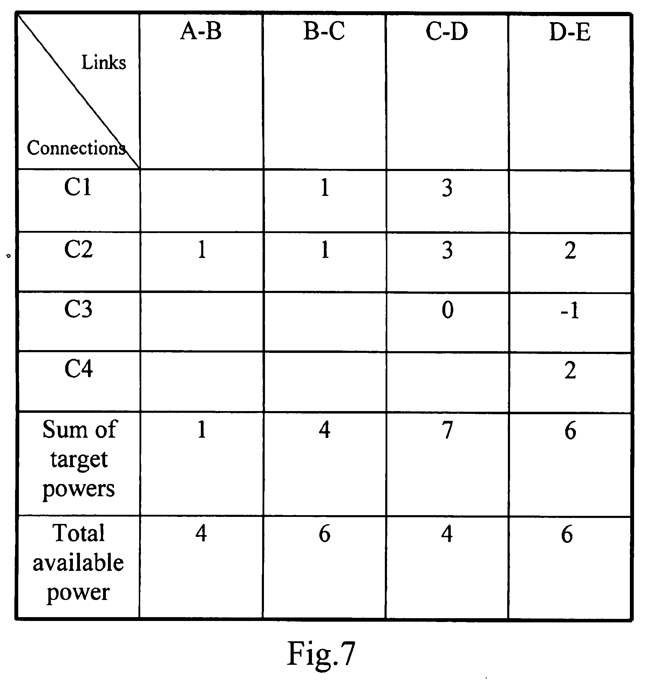

The table of figure 7 indicates the sum of the target power level for each link and the total available power in the corresponding link.

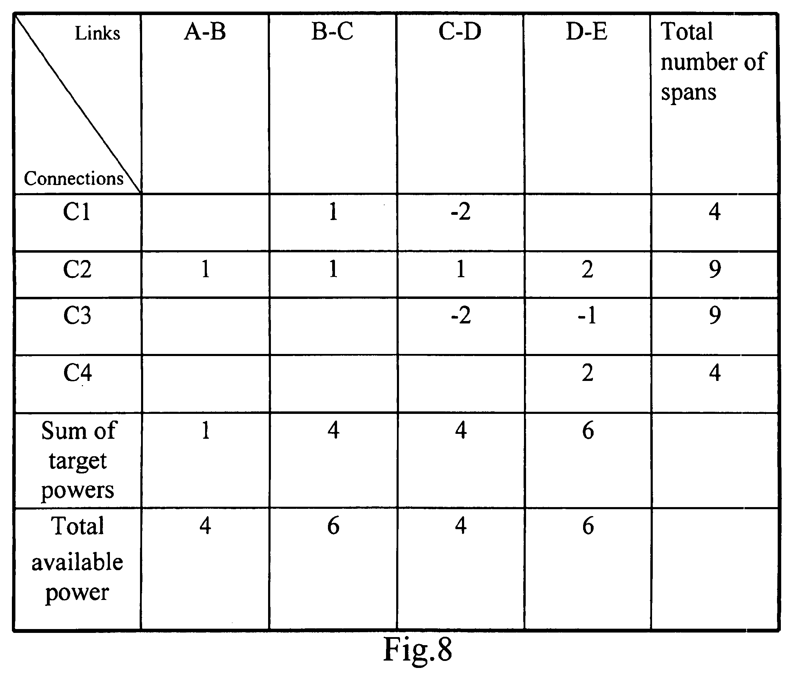

One can notice that in the link C-D the sum of the target power levels in the link is larger (of 3dB) than the total available power. Therefore, a power limitation in the link C-D prevents the adjustment of the power level in this link to the target power level. Thus, the power levels in the link C-D have to be reduced to respect the total available power condition. An equitable share of the available power would lead to a reduction of 3dB of each channel. Nevertheless, according the embodiments of the present invention, the power sharing is weighted by a vulnerability characterizing parameter. In the present example, this parameter is function of the number of spans of the connections. Figure 8 shows the adjustment of the power level in the link C-D. Roughly, the connections comprising 9 spans pre-empt an extra dB to the connections comprising only 4 spans.

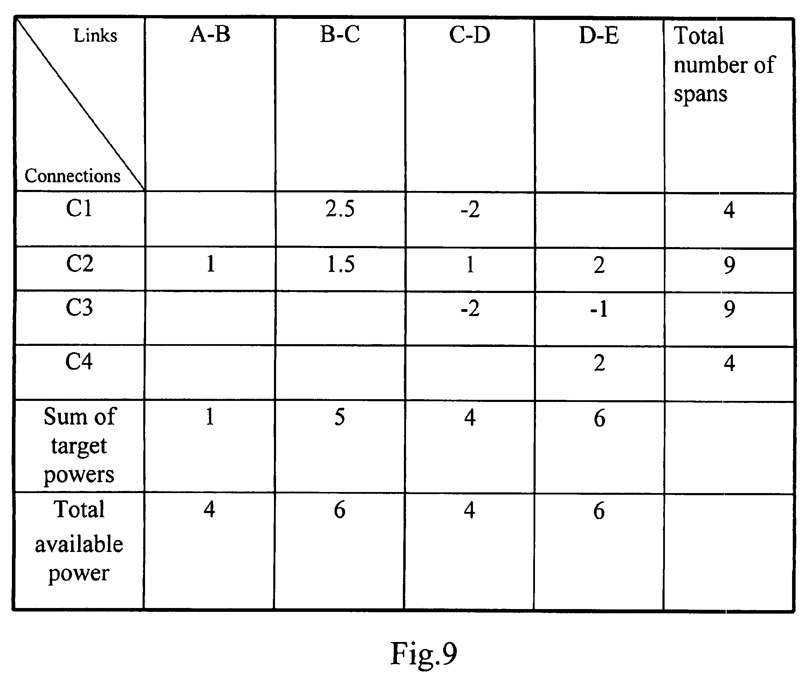

Besides, messages comprising the power adjustment in the link C-D are transmitted to the other link of the different connection. Thus, for the connections C1 and C2, the link B-C receives a message which indicates the lack of power in the link C-D for these connections. As the link B-C has an extra power margin, the power levels of the channels corresponding to the connections C1 and C2 in said link are increased in order to compensate for the lack of power in the link C-D. Figure 9 represents the adjustment after power compensation. Moreover, it has to be noted that the power compensation may be extend to several links along the connection if the power margin of one link is not sufficient to compensate the total lack of power. Furthermore, the power compensation may be achieved in any link of the connection (the previous links as well as the following links).

Thus, the present invention provides a method that allows adjusting channel power levels in each link of an optical network, thus allowing an optimized determination of the power level along a connection leading to an improvement of the transparency of the network. Moreover, the method of the present invention is distributed such that local computations achieve local optimizations and lead to a global optimization. Thus, the impact of an issue in the computation is reduced with respect to a centralized method and the power adjustment can adapt to any modifications in the network topology. Besides, the present invention takes into account the degradation features along the different connections in order to favour the connections having the lowest degradation robustness. Therefore, the optimization of the power level does not compromise the signal quality at destination. Moreover, the measured signal quality at destination can be used in a second order adjustment in order to optimize even more the power adjustment in the network.

**Claims**

1. Method for adjusting a channel power level along the path of a connection (1) in an optical network, said path crossing a plurality of links (7) comprising control mean (8) for adjusting said channel power level **characterised by** the adjustment being achieved in function of:

    - features of the connection and,
    - physical features of the links and,
    - features of the control means of the links,

    wherein the adjustment of the channel power level in the plurality of links crossed along the path of the connection is achieved by local computations performed is the plurality of links.

2. Method for adjusting a channel power level in accordance with claim 1, wherein a power level adjustment cooperation between the plurality of links crossed by the path of the connection is achieved by the transmission of at least one message along the links of the connection, said message comprising at least information concerning the connection and features of the links of said connection.

3. Method for adjusting a channel power level in accordance with claim 2 wherein the information of the message concerning a specific link is updated by the concerned link itself.

4. Method for adjusting a channel power level in accordance with one of the previous claims, wherein the control means comprise at least one optical element configured to adjust individual channel power levels.

5. Method for adjusting a channel power level in accordance with one of the previous claims, wherein the local computations comprise the adjustment of the channel power levels at the output of the links to match target power levels, said target power levels being determined for each link in function of:

    - the subsequent link features,
    - features of the connection.

6. Method for adjusting a channel power level in accordance with claim 5, wherein the tolerated difference between an actual power level of a link and the target power level of said link is constrained in function of:

    - power available in the link,
    - features of the control means of the link.

7. Method for adjusting a channel power level in accordance with claim 2 combined with claim 6 wherein the actual power level is modified in function of power status in other links of the connection, said power status being transmitted by at least one message.

8. Method for adjusting a channel power level in accordance with claim 2 combined with claim 5 or 6 or 7 wherein the target power level is modified in function of a signal quality at the end of the connection.

9. Method for adjusting a channel power level in accordance with claim 2 combined with one of the claims from 7 to 8 wherein the message comprises at least:

    - the output power of the previous link along the connection with respect to the link to which the message is currently sent;
    - the power status of at least one of the next links along the connection with respect to the link to which the message is currently sent.

10. Method for adjusting a channel power level in accordance with claim 7 combined with one of the claims 8 to 9 wherein the power status of a link comprises the difference between the actual channel power level and the target power level of said channel.

11. Method for adjusting a channel power level in accordance with claim 10 wherein the power status of a link comprises the range of power that said link can reach on said channel.

12. Method for adjusting a channel power level in accordance with one of the previous claims, wherein said method refers to an iterative and dynamic adjustment of the channel power level along said connection that converges towards an optimal solution.

13. Method for adjusting a channel power level in accordance with claim 12, wherein the iterative and dynamic adjustment corresponds to the minimization of a function f(P) such that:

$$f(P) = \sum_{n=1}^{N} (P_n - m_n)^2$$

where n is the link index, N the number of links in the connection $m_n$ is the target power level for the link n, $P_n$ is the actual power level for the link n, said minimization being subject to the following constraints:

$$P_n = P_{n-1} + \beta_n$$

where $\beta_n$ is the gain in the link n and corresponds to the sum of the power losses and power amplification in the link n, and

$$\beta_n^{minus} \leq \beta_n \leq \beta_n^{plus}$$

where $\beta_n^{minus}$ and $\beta_n^{plus}$ the bounds of the gain for the link n.

14. Method for adjusting a channel power level in accordance with one of the previous claims wherein the vulnerability characterizing parameter of a link influences the channel power level such that, in a connection crossing several links, for a link having a higher vulnerability characterizing parameter, the tolerated difference between an actual channel power level and the target power level is lower than for a link having a lower vulnerability characterizing parameter.

15. Method for adjusting a channel power level in accordance with claims 12 and 14 in combination, wherein the iterative and dynamic adjustment corresponds to the minimization of a function f(P) such that:

$$f(P) = \sum_{n=1}^{N} \left( \frac{1}{\sigma_n^2} \right) (P_n - m_n)^2$$

where n is the link index, N the number of links in the connection $m_n$ is the target power level for the link n, $P_n$ is the actual power level for the link n, $(1/\sigma_n)^2$ the vulnerability characterizing parameter of the link n, said minimization being subject to the following constraints:

$$P_n = P_{n-1} + \beta_n$$

where $\beta_n$ is the gain in the link n and corresponds to the sum of the power losses and power amplification in the link n, and

$$\beta_n^{minus} \leq \beta_n \leq \beta_n^{plus}$$

where $B_n^{minus}$ and $B_n^{plus}$ the bounds of the gain for the link n.

16. Method for adjusting a channel power level in accordance with claim 14 or 15, wherein the vulnerability characterizing parameter of the link varies in function of at least one parameter in the following list:

- length of the link,
- features of the optical transmission means used in the link,
- link design with respect to the chromatic dispersion.

17. Method for adjusting a channel power level in accordance with one of the previous claims wherein the vulnerability characterizing parameter of a connection influences the channel power level such that, in a link along the connection, for a channel corresponding to a connection having a higher vulnerability characterizing parameter, the tolerated difference between an actual channel power level and the target power level is lower than for a channel corresponding to a connection having a lower vulnerability characterizing parameter.

18. Method for adjusting a channel power level in accordance with one of the previous claims wherein a token is transmitted along the links of the connection and wherein a link is authorized to modify its actual power level and/or its target power value only when authorization is given by the token.

19. Optical node (8) **characterised by** comprising

- processing means for achieving local computation of a channel power level of a connection (1) crossing a plurality of links (7) the optical node, the computation being achieved in function of:
- features of the connection and,
- physical features of the links and,
- features of control means of the links,
- control means for adjusting said channel power level according to the channel power level computed by the processing means.

20. Optical node in accordance with claim 19 wherein said optical node comprises

> - reception means adapted for receiving a message comprising information about the links of the connection,
> - transmission means for transmitting a message to another node of the connection, and wherein the processing means are adapted for reading information received in a message.

**Patentansprüche**

1. Verfahren zum Einstellen eines Kanalleistungspegels längs des Pfads einer Verbindung (1) in einem optischen Netzwerk, wobei der besagte Pfad eine Vielzahl von Verbindungsabschnitten (7) mit Steuerungsmitteln (8) zum Einstellen des besagten Kanalleistungspegels durchquert, **dadurch gekennzeichnet, dass** das Einstellen in Abhängigkeit von:

> - Eigenschaften der Verbindung, und
> - physischen Eigenschaften der Verbindungsabschnitte, und
> - Eigenschaften der Steuerungsmittel der Verbindungsabschnitte erfolgt,

wobei das Einstellen des Kanalleistungspegels in der Vielzahl von längs des Pfads der Verbindung durchquerten Verbindungsabschnitten durch in der Vielzahl von Verbindungsabschnitten durchgeführte lokale Berechnungen erfolgt.

2. Verfahren zum Einstellen eines Kanalleistungspegels nach Anspruch 1, wobei ein Zusammenwirken der Einstellung des Leistungspegels zwischen der Vielzahl von von dem Pfad der Verbindung durchquerten Verbindungsabschnitten durch das Übertragen mindestens einer Nachricht längs der Abschnitte der Verbindung erfolgt, wobei die besagte Nachricht zumindest Informationen in Bezug auf die Verbindung und die Eigenschaften der Abschnitte der besagten Verbindung enthält.

3. Verfahren zum Einstellen eines Kanalleistungspegels nach Anspruch 2, wobei die Informationen der Nachricht in Bezug auf einen spezifischen Verbindungsabschnitt von dem betroffenen Abschnitt selbst aktualisiert werden.

4. Verfahren zum Einstellen eines Kanalleistungspegels nach einem der vorstehenden Ansprüche, wobei die Steuerungsmittel mindestens ein optisches Element umfassen, welches für das Einstellen von einzelnen Kanalleistungspegeln konfiguriert ist.

5. Verfahren zum Einstellen eines Kanalleistungspegels nach einem der vorstehenden Ansprüche, wobei die lokalen Berechnungen das Einstellen der Kanalleistungspegel am Ausgang des Verbindungsabschnitts umfassen, um Zielleistungspegeln zu entsprechen, wobei die besagten Zielleistungspegel für jeden Verbindungsabschnitt in Abhängigkeit von:

> - den Eigenschaften der nachfolgenden Verbindungsabschnitte,
> - Eigenschaften der Verbindung

bestimmt werden.

6. Verfahren zum Einstellen eines Kanalleistungspegels nach Anspruch 5, wobei die zulässige Differenz zwischen einem aktuellen Leistungspegel eines Verbindungsabschnitts und dem Zielleistungspegel des besagten Verbindungsabschnitts in Abhängigkeit von:

> - der in dem Verbindungsabschnitt verfügbaren Leistung,
> - Eigenschaften der Steuerungsmittel des Verbindungsabschnitts beschränkt ist.

7. Verfahren zum Einstellen eines Kanalleistungspegels nach Anspruch 2 in Verbindung mit Anspruch 6, wobei der aktuelle Leistungspegel in Abhängigkeit von dem Leistungszustand in anderen Abschnitten der Verbindung modifiziert wird, wobei der Leistungszustand anhand mindestens einer Nachricht übertragen wird.

8. Verfahren zum Einstellen eines Kanalleistungspegels nach Anspruch 2 in Verbindung mit Anspruch 5 oder 6 oder 7, wobei der Zielleistungspegel in Abhängigkeit von einer Signalqualität am Ende der Verbindung modifiziert wird.

9. Verfahren zum Einstellen eines Kanalleistungspegels nach Anspruch 2 in Verbindung mit einem der Ansprüche 7 bis 8, wobei die Nachricht mindestens enthält:

> - die Ausgangsleistung des auf der Verbindung vorausgehenden Abschnitts in Bezug auf den Abschnitt, an welchen die Nachricht gerade gesendet wird;
> - den Leistungszustand mindestens eines der nächsten Abschnitte längs der Verbindung in Bezug auf den Abschnitt, an welchen die Nachricht gerade gesendet wird.

10. Verfahren zum Einstellen eines Kanalleistungspegels nach Anspruch 7 in Verbindung mit einem der Ansprüche 8 bis 9, wobei der Leistungszustand eines Verbindungsabschnitts die Differenz zwischen dem aktuellen Kanalleistungspegel und dem Zielleistungspegel des besagten Kanals umfasst.

**11.** Verfahren zum Einstellen eines Kanalleistungspegels nach Anspruch 10, wobei der Leistungszustand eines Verbindungsabschnitts den Leistungsbereich, den der besagte Abschnitt auf dem besagten Kanal erreichen kann, umfasst.

**12.** Verfahren zum Einstellen eines Kanalleistungspegels nach einem der vorstehenden Ansprüche, wobei sich das besagte Verfahren auf ein iteratives und dynamisches Einstellen des Kanalleistungspegels längs der Verbindung, welches einer optimalen Lösung am nächsten kommt, bezieht.

**13.** Verfahren zum Einstellen eines Kanalleistungspegels nach Anspruch 12, wobei das iterative und dynamische Einstellen der Minimierung einer Funktion f(P) entspricht, so dass:

$$f(P) = \sum_{n=1}^{N} (P_n - m_n)^2$$

wobei n den Verbindungsabschnittsindex darstellt, N die Anzahl der Abschnitte auf der Verbindung darstellt, $m_n$ den Zielleistungspegel für den Verbindungsabschnitt n darstellt, $P_n$ den aktuellen Leistungspegel für den Verbindungsabschnitt n darstellt, wobei die besagte Minimierung den folgenden Beschränkungen unterliegt:

$$P_n = P_{n-1} + \beta_n$$

wobei $\beta_n$ die Verstärkung in dem Verbindungsabschnitt n darstellt und der Summe der Leistungsverluste und der Leistungsverstärkung in dem Verbindungsabschnitt n entspricht, und

$$\beta_n^{minus} \leq \beta_n \leq \beta_n^{plus}$$

wobei $\beta_n^{minus}$ und $\beta_n^{plus}$ die Grenzen der Verstärkung für den Verbindungsabschnitt n darstellen.

**14.** Verfahren zum Einstellen eines Kanalleistungspegels nach einem der vorstehenden Ansprüche, wobei der die Schwachstelle kennzeichnende Parameter eines Verbindungsabschnitts den Kanalleistungspegel derart beeinflusst, dass in einer mehrere Abschnitte durchquerenden Verbindung, für einen Abschnitt mit einem höheren die Schwachstelle kennzeichnenden Parameter, die zulässige Differenz zwischen einem aktuellen Kanalleistungspegel und dem Zielleistungspegel niedriger ist als für einen Abschnitt mit einem niedrigeren die Schwachstelle kennzeichnenden Parameter.

**15.** Verfahren zum Einstellen eines Kanalleistungspegels nach den kombinierten Ansprüchen 12 und 14, wobei das iterative und dynamische Einstellen der Minimierung einer Funktion f(P) entspricht, so dass:

$$f(P) = \sum_{n=1}^{N} \left(\frac{1}{\sigma_n^2}\right)(P_n - m_n)^2$$

wobei n den Verbindungsabschnittsindex darstellt, N die Anzahl der Abschnitte auf der Verbindung darstellt, $m_n$ den Zielleistungspegel für den Verbindungsabschnitt n darstellt, $P_n$ den aktuellen Leistungspegel für den Verbindungsabschnitt n darstellt, $(1/\sigma_n)^2$ den die Schwachstelle kennzeichnenden Parameter des Verbindungsabschnitts n darstellt, wobei die besagte Minimierung den folgenden Beschränkungen unterliegt:

$$P_n = P_{n-1} + \beta_n$$

wobei $\beta_n$ die Verstärkung in dem Verbindungsabschnitt n darstellt und der Summe der Leistungsverluste und der Leistungsverstärkung in dem Verbindungsabschnitt n entspricht, und

$$\beta_n^{minus} \leq \beta_n \leq \beta_n^{plus}$$

wobei $B_n^{minus}$; und $B_n^{plus}$ die Grenzen der Verstärkung für den Verbindungsabschnitt n darstellen.

**16.** Verfahren zum Einstellen eines Kanalleistungspegels nach Anspruch 14 oder 15, wobei der die Schwachstelle kennzeichnende Parameter des Verbindungsabschnitts in Abhängigkeit von mindestens einem Parameter der folgenden Liste schwankt:

   - Länge des Verbindungsabschnitts,
   - Eigenschaften der auf dem Verbindungsabschnitt benutzten optischen Sendemittel,
   - Gestaltung des Verbindungsabschnitts in Bezug auf die chromatische Dispersion.

**17.** Verfahren zum Einstellen eines Kanalleistungspegels nach einem der vorstehenden Ansprüche, wobei der die Schwachstelle kennzeichnende Parameter einer Verbindung den Kanalleistungspegel derart beeinflusst, dass in einem Abschnitt längs der Verbindung, für einen Kanal, welcher einer Verbindung mit einem höheren die Schwachstelle kennzeichnenden Parameter entspricht, die zulässige Differenz zwischen einem aktuellen Kanalleistungspegel und dem Zielleistungspegel niedriger ist als für einen Kanal, welcher einer Verbindung mit einem niedrigeren die Schwachstelle kennzeichnenden Parameter entspricht.

18. Verfahren zum Einstellen eines Kanalleistungspegels nach einem der vorstehenden Ansprüche, wobei ein Token längs der Abschnitte der Verbindung übertragen wird, und wobei ein Verbindungsabschnitt nur dann autorisiert ist, seinen aktuellen Leistungspegel und/oder seinen Zielleistungswert zu modifizieren, wenn der Token die Autorisierung dazu gibt.

19. Optischer Knoten (8), **dadurch gekennzeichnet, dass** er umfasst:

- Verarbeitungsmittel zum Durchführen einer lokalen Berechnung eines Kanalleistungspegels einer Verbindung (1), welche eine Vielzahl von Abschnitten (7) durchquert, und des optischen Knotens, wobei die Berechnung in Abhängigkeit von:
- Eigenschaften der Verbindung, und
- physischen Eigenschaften der Verbindungsabschnitte, und
- Eigenschaften der Steuerungsmittel der Verbindungsabschnitte erfolgt,
- Steuerungsmittel zum Einstellen des besagten Kanalleistungspegels gemäß dem von den Verarbeitungsmitteln berechneten Kanalleistungspegel.

20. Optischer Knoten nach Anspruch 19, wobei der besagte optische Knoten umfasst:

- Empfangsmittel, welche für den Empfang einer Nachricht mit Informationen über die Abschnitte der Verbindung ausgelegt sind,
- Sendemittel für die Übertragung einer Nachricht an einen anderen Knoten der Verbindung, und wobei die Verarbeitungsmittel für das Auslesen der in einer Nachricht empfangenen Informationen ausgelegt sind.

**Revendications**

1. Procédé pour régler un niveau de puissance du canal le long du chemin d'une connexion (1) dans un réseau optique, ledit chemin traversant une pluralité de liaisons (7) comprenant des moyens de commande (8) pour régler ledit niveau de puissance du canal, **caractérisé en ce que** le réglage est réalisé en fonction :

- des caractéristiques de la connexion et,
- des caractéristiques physiques des liaisons et,
- des caractéristiques des moyens de commande des liaisons,

dans lequel le réglage du niveau de puissance du canal dans la pluralité de liaisons traversées le long du chemin de la connexion est réalisé par des calculs locaux effectués dans la pluralité de liaisons.

2. Procédé pour régler un niveau de puissance du canal selon la revendication 1, dans lequel une coopération de réglage du niveau de puissance entre la pluralité de liaisons traversées par le chemin de la connexion est réalisée par la transmission d'au moins un message le long des liaisons de la connexion, ledit message comprenant au moins des informations concernant la connexion et les caractéristiques des liaisons de ladite connexion.

3. Procédé pour régler un niveau de puissance du canal selon la revendication 2 dans lequel les informations du message concernant une liaison spécifique sont mises à jour par la liaison concernée elle-même.

4. Procédé pour régler un niveau de puissance du canal selon l'une des revendications précédentes, dans lequel les moyens de commande comprennent au moins un élément optique configuré pour régler chaque niveau de puissance du canal.

5. Procédé pour régler un niveau de puissance du canal selon l'une des revendications précédentes, dans lequel les calculs locaux comprennent le réglage des niveaux de puissance du canal à la sortie des liaisons pour correspondre aux niveaux de puissance cibles, lesdits niveaux de puissance cibles étant déterminés pour chaque liaison en fonction :

- des caractéristiques de liaison suivante,
- des caractéristiques de la connexion.

6. Procédé pour régler un niveau de puissance du canal selon la revendication 5, dans lequel la différence tolérée entre un niveau de puissance réel d'une liaison et le niveau de puissance cible de ladite liaison est contrainte en fonction :

- de la puissance disponible dans la liaison,
- des caractéristiques des moyens de commande de la liaison.

7. Procédé pour régler un niveau de puissance du canal selon la revendication 2 associée à la revendication 6 dans lequel le niveau de puissance réel est modifié en fonction de l'état de puissance dans d'autres liaisons de la connexion, ledit état de puissance étant transmis par au moins un message.

**8.** Procédé pour régler un niveau de puissance du canal selon la revendication 2 associée à la revendication 5, 6 ou 7 dans lequel le niveau de puissance cible est modifié en fonction d'une qualité de signal à la fin de la connexion.

**9.** Procédé pour régler un niveau de puissance du canal selon la revendication 2 associée à l'une des revendications 7 et 8 dans lequel le message comprend au moins :

- la puissance de sortie de la liaison précédente le long de la connexion par rapport à la liaison à laquelle le message est actuellement envoyé ;
- l'état de puissance d'au moins une des liaisons suivantes le long de la connexion par rapport à la liaison à laquelle le message est actuellement envoyé.

**10.** Procédé pour régler un niveau de puissance du canal selon la revendication 7 associée à l'une des revendications 8 et 9 dans lequel l'état de puissance d'une liaison comprend la différence entre le niveau de puissance réel du canal et le niveau de puissance cible dudit canal.

**11.** Procédé pour régler un niveau de puissance du canal selon la revendication 10 dans lequel l'état de puissance d'une liaison comprend la plage de puissance que ladite liaison peut atteindre sur ledit canal.

**12.** Procédé pour régler un niveau de puissance du canal selon l'une des revendications précédentes, dans lequel ledit procédé se rapporte à un réglage itératif et dynamique du niveau de puissance du canal le long de ladite connexion qui converge vers une solution optimale.

**13.** Procédé pour régler un niveau de puissance du canal selon la revendication 12, dans lequel le réglage itératif et dynamique correspond à la réduction au minimum d'une fonction f(P) telle que :

$$f(P) = \sum_{n=1}^{N} (P_n - m_n)^2$$

dans laquelle n est l'indice de liaison, N le nombre de liaisons dans la connexion, mn est le niveau de puissance cible pour la liaison n, Pn est le niveau de puissance réel pour la liaison n, ladite réduction au minimum étant soumise aux contraintes suivantes :

$$P_n = P_{n-1} + \beta_n$$

où βn est le gain dans la liaison n et correspond à la somme des pertes de puissance et de l'amplification de puissance dans la liaison n, et

$$\beta_n^{minus} \leq \beta_n \leq \beta_n^{plus}$$

où $\beta_n^{minus}$ et $\beta_n^{plus}$ sont les limites du gain pour la liaison n.

**14.** Procédé pour régler un niveau de puissance du canal selon l'une des revendications précédentes dans lequel le paramètre caractérisant la vulnérabilité d'une liaison influence le niveau de puissance du canal de sorte que, dans une connexion traversant plusieurs liaisons, pour une liaison présentant un paramètre caractérisant la vulnérabilité supérieur, la différence tolérée entre un niveau de puissance réel du canal et le niveau de puissance cible est inférieure à celle d'une liaison présentant un paramètre caractérisant la vulnérabilité inférieur.

**15.** Procédé pour régler un niveau de puissance du canal selon les revendications 12 et 14, en association, dans lequel le réglage itératif et dynamique correspond à la réduction au minimum d'une fonction f(P) telle que :

$$f(P) = \sum_{n=1}^{N} \left( \frac{1}{\sigma_n^2} \right) (P_n - m_n)^2$$

dans laquelle n est l'indice de liaison, N le nombre de liaisons dans la connexion, $m_n$ est le niveau de puissance cible pour la liaison n, $P_n$ est le niveau de puissance réel pour la liaison n, $(1/\sigma_n)^2$ est le paramètre caractérisant la vulnérabilité de la liaison n ladite réduction au minimum étant soumise aux contraintes suivantes :

$$P_n = P_{n-1} + \beta_n$$

où $\beta_n$ est le gain dans la liaison n et correspond à la somme des pertes de puissance et de l'amplification de puissance dans la liaison n, et

$$\beta_n^{\min us} \leq \beta_n \leq \beta_n^{plus}$$

où $\beta_n^{minus}$ et $\beta_n^{plus}$ sont les limites du gain pour la liaison n.

**16.** Procédé pour régler un niveau de puissance du canal selon la revendication 14 ou 15, dans lequel le paramètre caractérisant la vulnérabilité de la liaison varie en fonction d'au moins un paramètre dans la liste suivante :

- longueur de la liaison,
- caractéristiques des moyens de transmission optique utilisés dans la liaison,
- conception de liaison par rapport à la dispersion chromatique.

**17.** Procédé pour régler un niveau de puissance du canal selon l'une des revendications précédentes dans lequel le paramètre caractérisant la vulnérabilité d'une connexion influence le niveau de puissance du canal de sorte que, dans une liaison le long de la connexion, pour un canal correspondant à une connexion présentant un paramètre caractérisant la vulnérabilité supérieur, la différence tolérée entre un niveau de puissance réel du canal et le niveau de puissance cible est inférieure à celle d'un canal correspondant à une connexion présentant un paramètre caractérisant la vulnérabilité inférieur.

**18.** Procédé pour régler un niveau de puissance du canal selon l'une des revendications précédentes dans lequel un jeton est transmis le long des liaisons de la connexion et dans lequel une liaison est autorisée à modifier son niveau de puissance réel et/ou sa valeur de puissance cible seulement lorsque l'autorisation est donnée par le jeton.

**19.** Noeud optique (8) **caractérisé en ce qu'**il comprend

- des moyens de traitement pour réaliser un calcul local d'un niveau de puissance du canal d'une connexion (1) traversant une pluralité de liaisons (7) et le noeud optique, le calcul étant réalisé en fonction :
- des caractéristiques de la connexion et,
- des caractéristiques physiques des liaisons et,
- des caractéristiques des moyens de commande des liaisons,
- des moyens de commande pour régler ledit niveau de puissance du canal en fonction du niveau de puissance du canal calculé par les moyens de traitement.

**20.** Noeud optique selon la revendication 19 dans lequel ledit noeud optique comprend

- des moyens de réception adaptés pour recevoir un message comprenant des informations concernant les liaisons de la connexion,
- des moyens de transmission pour transmettre un message à un autre noeud de la connexion, et dans lequel les moyens de traitement sont adaptés pour lire des informations reçues dans un message.

Fig.1

Fig.2

λ1
λ2
⋮
λn

7

9

15

EP 2 259 464 B1

EP 2 259 464 B1

Fig.3

Fig.4

EP 2 259 464 B1

Fig.5

EP 2 259 464 B1

| Connections \ Links | A-B | B-C | C-D | D-E | Connection bitrate |
|---|---|---|---|---|---|
| C1 | | 1 | 3 | | 10Gb/s |
| C2 | 1 | 1 | 3 | 2 | 10 Gb/s |
| C3 | | | 0 | -1 | 2.5 Gb/s |
| C4 | | | | 2 | 10 Gb/s |
| Number of span | 3 | 3 | 1 | 2 | |
| Length of spans | 80 km | 80 km | 110 km | 100 km | |

Fig.6

| Connections \ Links | A-B | B-C | C-D | D-E |
|---|---|---|---|---|
| C1 | | 1 | 3 | |
| C2 | 1 | 1 | 3 | 2 |
| C3 | | | 0 | -1 |
| C4 | | | | 2 |
| Sum of target powers | 1 | 4 | 7 | 6 |
| Total available power | 4 | 6 | 4 | 6 |

Fig.7

EP 2 259 464 B1

| Links / Connections | A-B | B-C | C-D | D-E | Total number of spans |
|---|---|---|---|---|---|
| C1 | | 1 | -2 | | 4 |
| C2 | 1 | 1 | 1 | 2 | 9 |
| C3 | | | -2 | -1 | 9 |
| C4 | | | | 2 | 4 |
| Sum of target powers | 1 | 4 | 4 | 6 | |
| Total available power | 4 | 6 | 4 | 6 | |

Fig.8

EP 2 259 464 B1

| Links / Connections | A-B | B-C | C-D | D-E | Total number of spans |
|---|---|---|---|---|---|
| C1 | | 2.5 | -2 | | 4 |
| C2 | 1 | 1.5 | 1 | 2 | 9 |
| C3 | | | -2 | -1 | 9 |
| C4 | | | | 2 | 4 |
| Sum of target powers | 1 | 5 | 4 | 6 | |
| Total available power | 4 | 6 | 4 | 6 | |

Fig.9

EP 2 259 464 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040208531 A